# FASCICULE DE BREVET EUROPEEN

(11) **EP 0 844 430 B1**
(45) Date de publication et mention de la délivrance du brevet: **17.12.2003**
(21) Numéro de dépôt: 97402583.5
(22) Date de dépôt: 30.10.1997
(51) Int. Cl.: F17C 5/00, F17C 7/00

(54) **Procédé pour ré-éprouver un emballage rempli d'un fluide actif et d'un propulseur et appareillage pour la mise en oeuvre du procédé**
Verfahren und Vorrichtung zum Testen einer mit einem Arbeitsfluidum und einem Treibmittel gefüllten Verpackung
Process and installation for testing a package filled with a workingfluid and a propellant

(30) Priorité: 20.11.1996 FR 9614135
(43) Date de publication de la demande: 27.05.1998
(73) Titulaire: Dehon S.A., 75011 Paris (FR)
(72) Inventeur: Crouzet, René, 93360 Neuilly Plaisance (FR)
(74) Mandataire: Bloch, Gérard

(56) Documents cités:
- EP-A- 0 388 332
- DE-A- 3 122 886
- FR-A- 2 657 870

## Description

L'invention concerne les extincteurs, et plus généralement les emballages contenant un mélange sous pression d'un fluide actif, comme un gaz liquéfié, et d'un propulseur.

Comme on se sert de tels emballages peu fréquemment, leur état de marche doit être régulièrement contrôlé afin d'éviter d'éventuels dysfonctionnements, notamment après une longue durée de non usage.

L'invention est née d'un problème de contrôle d'emballage de halon.

Le « halon » s'entend des dérivés halogénés des carbures saturés, de la forme CₐHₓF_{b}Cl_{c}Br_{d}.

Les emballages considérés sont remplis d'un mélange pressurisé d'un fluide actif inhibiteur de combustion, généralement à l'état de gaz liquéfié, en l'espèce du halon, par exemple de formule CF₃Br (trifluorobromométhane), et d'un gaz de propulsion du fluide actif, généralement de l'azote (N₂).

Afin de ré-éprouver l'emballage de halon, jusqu'à aujourd'hui, on transfère d'abord le mélange pressurisé de halon et d'azote dans un réservoir tampon, clos et étanche. Puis, on sépare ensuite l'azote du halon afin d'obtenir du halon que l'on peut réutiliser par la suite.

On ré-éprouve l'emballage en le soumettant à un test hydraulique et en vérifiant sa vanne.

Après le contrôle technique, on remplit à nouveau l'emballage en transférant le halon, puis en rajoutant de l'azote à partir d'une recharge d'azote jusqu'à obtenir la surpression voulue à l'intérieur de l'emballage.

L'opération de séparation de l'azote du halon, précédant le remplissage de l'emballage, au cours duquel on mélange à nouveau de l'azote au halon, peut paraître réalisée en dépit du bon sens, mais s'explique par le fait que les machines dont disposent les opérateurs pour remplir à nouveau l'emballage sont les mêmes que celles utilisées pour le remplissage initial de l'emballage au cours duquel on remplit séparément et successivement l'emballage en halon et en azote.

Un tel contrôle technique d'emballage est un procédé lourd, coûteux en énergie et en main-d'oeuvre.

En outre, il occasionne des pertes non négligeables de halon, notamment lors de la séparation de l'azote du halon, qui sont non seulement coûteuses économiquement, mais également néfastes pour l'environnement.

L'invention vise à pallier ces inconvénients.

A cet effet, l'invention concerne un procédé pour ré-éprouver un emballage rempli d'un mélange pressurisé d'un fluide actif et d'un gaz propulseur pour le fluide actif, procédé dans lequel on transfère le mélange dans un réservoir tampon dans lequel on stocke le mélange pressurisé, et on le laisse se séparer en une phase liquide et une phase vapeur en équilibre, on ré-éprouve l'emballage puis on remplit à nouveau l'emballage successivement en l'une et l'autre des deux phases liquide et vapeur du réservoir tampon dans des proportions relatives qu'on dose.

On soulignera le mérite de la demanderesse qui, afin d'éliminer l'opération de séparation, a su tirer profit de la physique des gaz.

En effet, d'après les lois de la physique des gaz, le mélange pressurisé de halon et d'azote stocké dans le réservoir tampon comprend deux phases, une phase liquide et une phase vapeur de compositions différentes. L'azote est dissout en très faible quantité dans la phase liquide qui contient essentiellement du halon, le reste d'azote, déterminant pour la pressurisation, se trouvant principalement dans la phase vapeur.

Avantageusement, on pèse l'emballage et on contrôle sa pression intérieure pour doser les proportions relatives des deux phases liquide et vapeur lors du nouveau remplissage de l'emballage.

Grâce à cela, on garantit un poids d'emballage à nouveau rempli et une pression intérieure d'emballage, conformes aux spécifications de l'emballage initial.

Avantageusement encore, pour le remplissage à nouveau de l'emballage on pompe séparément les deux phases liquide et vapeur du réservoir tampon.

Parallèlement au remplissage à nouveau de l'emballage en phase vapeur du réservoir tampon pour la pressurisation, on peut ajouter du gaz propulseur dans l'emballage pour l'obtention de la pression specifiée déterminée dans l'emballage.

Ainsi, on ajuste si nécessaire le dosage pour être conforme aux spécifications de l'emballage initial.

En outre, on peut ré-éprouver une pluralité d'emballages par transfert de leur mélange dans le réservoir tampon, puis remplissage à nouveau de la pluralité des emballages.

L'invention concerne aussi un appareillage pour ré-éprouver un emballage rempli d'un mélange pressurisé d'un fluide actif et d'un gaz propulseur pour le fluide actif, pour la mise en oeuvre du procédé, comprenant :
- une pompe d'aspiration de liquide et de gaz comportant une entrée et une sortie reliées toutes deux au réservoir tampon avec interposition de deux vannes respectives de remplissage et de transfert, et
- une pompe d'aspiration de gaz reliée en entrée au réservoir tampon.

L'invention sera mieux comprise à l'aide de la description suivante d'un mode de réalisation particulier du procédé pour ré-éprouver un emballage 1, et d'une forme de réalisation particulière de l'appareillage pour la mise en oeuvre du procédé, en référence au dessin annexé sur lequel :
- la figure 1 représente un schéma de l'appareillage, sans le dispositif final de remplissage, et
- la figure 2 représente un schéma du dispositif final de remplissage.

Le procédé et l'appareillage pour la mise en oeuvre du procédé sont destinés à ré-éprouver l'emballage 1, en l'espèce un extincteur au halon, rempli d'un mélange pressurisé ici d'un gaz liquéfié actif inhibiteur de combustion, du halon ici de formule CF₃Br (trifluorobromométhane), et d'un gaz de propulsion du gaz actif, en l'espèce de l'azote (N₂), afin de contrôler l'état de l'emballage 1.

L'appareillage pour ré-éprouver l'emballage 1 comprend une pompe 2 d'aspiration de liquide et de gaz, un compresseur de pompage, ou pompe 3 d'aspiration de gaz, et un réservoir tampon 4, clos et étanche, de stockage du mélange pressurisé de halon et d'azote.

La pompe 2 d'aspiration de liquide et de gaz comprend une entrée 6 et une sortie 7, reliées toutes deux à une entrée-sortie 8 du réservoir tampon 4, à l'aide d'une conduite 9 partiellement dédoublée en deux branches de conduite 9', et 9" respectivement reliées à l'entrée 6 et à la sortie 7 de la pompe 2. Une vanne de remplissage 5 et une vanne de transfert 10 sont interposées entre l'entrée-sortie 8 du réservoir 4 et, respectivement, l'entrée 6 et la sortie 7 de la pompe 2. La branche de conduite 9" comprend également un point de raccord 11, situé entre la sortie 7 et la vanne 10, et raccordé à une entrée 16 du dispositif de remplissage, comme décrit plus loin. La sortie de la vanne de remplissage 5 est reliée à la sortie d'une autre vanne de transfert 29, également reliée à l'entrée 6 de la pompe 2, la vanne 29 étant destinée à être reliée en entrée à l'emballage 1.

La pompe 3 d'aspiration de gaz comprend une entrée 12 reliée à une autre entrée-sortie 13 du réservoir tampon 4, et une sortie 14 reliée à une entrée à gaz 17 du dispositif de remplissage.

A la sortie de chacune des pompes 2 et 3 est disposé un refroidisseur, non représenté.

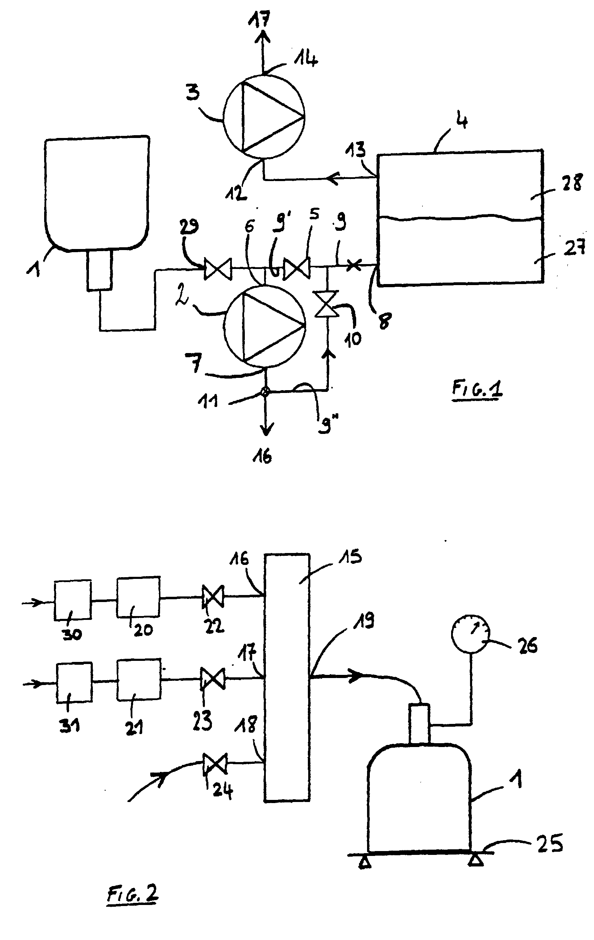

Le dispositif de remplissage, représenté sur la figure 2, comprend un collecteur 15 comportant l'entrée à liquide 16, l'entrée à gaz 17, une entrée supplémentaire 18, et une sortie 19.

L'entrée à liquide 16 et l'entrée à gaz 17 sont reliées respectivement à la sortie 7 de la pompe 2 et à la sortie 14 de la pompe 3, chacune par l'intermédiaire d'un filtre 20, 21 et d'une vanne 22, 23, chacun des filtres 20, 21 étant associé à un dispositif de déshydratation 30, 31.

L'entrée supplémentaire 18 est raccordable par l'intermédiaire d'une vanne 24, à une recharge d'azote non représentée.

La sortie 19 du collecteur15 est destinée à être raccordée à l'entrée-sortie de l'emballage 1.

Le dispositif de remplissage comprend également une bascule 25 destinée à peser l'emballage 1, et un manomètre 26 pour mesurer la pression à l'intérieur de l'emballage 1.

Enfin, l'appareillage comprend un dispositif de contrôle technique, non représenté, comportant un système de test hydraulique de l'emballage et un système de vérification de la vanne.

Après la description structurelle de l'appareillage, le procédé pour ré-éprouver l'emballage 1, correspondant au fonctionnement de l'appareillage, va maintenant être décrit.

Après avoir raccordé l'entrée-sortie de l'emballage 1 à l'entrée 6 de la pompe 2 d'aspiration de liquide et gaz, on transfère le mélange de l'emballage 1 dans le réservoir tampon 4 en ouvrant les vannes de transfert 29 et 10 et en pompant le gaz liquéfié de halon et le gaz d'azote, et on stocke le mélange pressurisé dans le réservoir 4.

Après transfert, le mélange pressurisé de halon et d'azote est contenu dans le réservoir tampon 4, et on le laisse se séparer en une phase liquide 27 et une phase vapeur 28 en équilibre. La phase liquide renferme essentiellement du halon, avec une faible proportion relative d'azote dissout, et la phase vapeur un mélange de halon et d'azote riche en azote.

Puis on ré-éprouve l'emballage 1 vidé, en lui faisant subir un test hydraulique au cours duquel on remplit l'emballage 1 d'eau, on porte l'intérieur de l'emballage 1 à une pression déterminée, et on examine le comportement de l'emballage 1. On vérifie également le bon fonctionnement de la vanne de l'emballage 1.

Après le contrôle technique et afin de remplir à nouveau l'emballage 1, on le place sur la bascule 25, on raccorde son entrée-sortie à la sortie 19 du collecteur 15, et on installe le manomètre de mesure de la pression intérieure ici sur l'emballage 1.

On ouvre alors la vanne de remplissage 5 et la vanne 22 de l'entrée à liquide 16 du collecteur 15, en s'assurant que les vannes 23, 24 des entrées du collecteur 15 et les vannes de transfert 29 et 10 de la pompe 2 sont fermées. Puis on tire la phase liquide 27 du réservoir tampon 4, à l'aide de la pompe 2 afin de remplir l'emballage 1, tout en le pesant (25). Lors du remplissage, le liquide sort du réservoir 4 par son entrée-sortie 8, traverse la pompe 2 par son entrée 6 et sa sortie 7, le point de raccord 11, et enfin le collecteur 15 par son entrée à liquide 16 et sa sortie 19. On arrête de pomper la phase liquide lorsque la bascule 25 indique un poids d'emballage déterminé correspondant sensiblement à la dose voulue de halon.

Après le- pompage en liquide, et pour la pressurisation de l'emballage 1, on tire séparément la phase vapeur du réservoir tampon 4 en remplissant l'emballage 1, comme pour la phase liquide mais en ouvrant la vanne 23 d'entrée à gaz du collecteur 15 et en utilisant l'entrée-sortie 13 du réservoir 4 et la pompe 3 d'aspiration de gaz. Parallèlement au remplissage en phase vapeur, on ajoute éventuellement de l'azote dans l'emballage 1 en raccordant l'entrée supplémentaire 18 du collecteur 15 à une recharge d'azote et en ouvrant la vanne 24. On alimente ainsi l'emballage 1 en phase vapeur 28 et en azote jusqu'à atteindre une pression déterminée correspondant aux spécifications voulues.

On pourrait également envisager de procéder d'abord au remplissage en phase vapeur puis, séparément toujours, au remplissage en phase liquide.

On a commencé par décrire le procédé en référence à un seul emballage. Dans la pratique, on ré-éprouve une pluralité d'emballages par transfert de leur mélange dans le réservoir tampon, puis remplissage à nouveau de la pluralité d'emballages.

On pourrait également envisager de disposer chaque ensemble de filtrage et de déshydration 20, 30 et 21, 31 non plus en sortie de pompe mais en entrée.

## Revendications

1. Procédé pour ré-éprouver un emballage (1) rempli d'un mélange pressurisé d'un fluide actif et d'un gaz propulseur pour le fluide actif, procédé dans lequel on transfère le mélange dans un réservoir tampon (4) dans lequel on stocke le mélange pressurisé, et on le laisse se séparer en une phase liquide et une phase vapeur en équilibre, on ré-éprouve l'emballage (1), puis on remplit à nouveau l'emballage (1) successivement en l'une et l'autre des deux phases liquide (27) et vapeur (28) du réservoir tampon (4), dans des proportions relatives qu'on dose.

2. Procédé selon la revendication 1, dans lequel on pèse (25) l'emballage (1), et on contrôle sa pression intérieure (26) pour doser les proportions relatives des deux phases liquide (27) et vapeur (28) lors du nouveau remplissage de l'emballage.

3. Procédé selon l'une des revendications 1 et 2, dans lequel pour le remplissage à nouveau de l'emballage (1), on pompe séparément les deux phases liquide (27) et vapeur (28) du réservoir tampon (4).

4. Procédé selon l'une des revendications 1 à 3, dans lequel, parallèlement au remplissage à nouveau de l'emballage (1) en phase vapeur (28) du réservoir tampon (4), on ajoute du gaz propulseur dans l'emballage (1) pour l'obtention d'une pression déterminée dans l'emballage (1).

5. Procédé selon l'une des revendications 1 à 4, dans lequel on ré-éprouve une pluralité d'emballages par transfert de leur mélange dans le réservoir tampon, puis remplissage à nouveau de la pluralité des emballages.

6. Appareillage pour ré-éprouver un emballage (1) rempli d'un mélange pressurisé d'un fluide actif et d'un gaz propulseur pour le fluide actif, pour la mise en oeuvre du procédé de la revendication 1, comprenant :
- une pompe (2) d'aspiration de liquide et de gaz comportant une entrée (6) et, une sortie (7) reliées toutes deux au réservoir tampon (4) avec interposition de deux vannes respectives de remplissage (5) et de transfert (10), et
- une pompe (3) d'aspiration de gaz reliée en entrée (12) au réservoir tampon (4).

7. Appareil selon la revendication 6, dans lequel la sortie de la vanne de remplissage (5) est reliée à la sortie d'une autre vanne de transfert (29).

8. Appareillage selon l'une des revendications 6 et 7, dans lequel les sorties (7, 14) des deux pompes (2, 3) sont reliées à un collecteur (15) pourvu d'une entrée supplémentaire (18) raccordable à une recharge de gaz propulseur.

## Patentansprüche

1. Verfahren zum erneuten Überprüfen eines Behälters (1), der mit einem unter Druck stehenden Gemisch aus einem aktiven Fluid und einem Treibgas für das aktive Fluid gefüllt ist, wobei das Gemisch in einen Puffertank (4) übertragen wird, in dem das unter Druck stehende Gemisch gelagert wird und wobei dem Gemisch ermöglicht wird, dass es sich zu einer flüssigen Phase und einer Dampfphase trennt, die in einem Ausgleichzustand sind, wobei der Behälter (1) erneut überprüft wird, und der Behälter (1) dann aus dem Puffertank (4) wieder sukzessive mit der einen und der anderen der beiden Flüssig- (27) und Dampfphasen (28) in relativen Verhältnissen befüllt wird, die dosiert werden.

2. Verfahren nach Anspruch 1,
**dadurch gekennzeichnet, dass**
der Behälter (1) gewogen (25) und sein Innendruck (26) festgestellt wird, um die relativen Verhältnisse der beiden Phasen - der flüssigen Phase (27) und der Dampfphase (28) - bei der neuen Befüllung des Behälters zu dosieren.

3. Verfahren nach einem der Ansprüche 1 und 2,
**dadurch gekennzeichnet, dass**
für die Wiederbefüllung des Behälters (1) die beiden Phasen - die flüssige Phase (27) und die Dampfphase (28) - getrennt aus dem Puffertank (4) gepumpt werden.

4. Verfahren nach einem der Ansprüche 1 bis 3,
**dadurch gekennzeichnet, dass**
parallel zur Wiederbefüllung des Behälters (1) mit der Dampfphase (28) aus dem Puffertank (4) dem Behälter (1) Treibgas zugegeben wird, um im Behälter (1) einen bestimmten Druck zu erhalten.

5. Verfahren nach einem der Ansprüche 1 bis 4,
**dadurch gekennzeichnet, dass**
mehrere Behälter durch ein Übertragen ihres Gemischs in den Puffertank und eine anschließende Wiederbefüllung der mehreren Behälter erneut überprüft werden.

6. Vorrichtung zum erneuten Überprüfen eines Behälters (1), der mit einem unter Druck befindlichen Gemisch aus einem aktiven Fluid und einem Treibgas für das aktive Fluid gefüllt ist, zur Durchführung des Verfahrens nach Anspruch 1, umfassend:
- eine Flüssigkeits- und Gasförderpumpe (2) mit einem Eingang (6) und einem Ausgang (7), die beide mit dem Puffertank (4) verbunden sind, wobei zwei Ventile, ein Befüllventil (5) und ein Übertragungsventil (10) dazwischen angeordnet sind, und
- eine Gasförderpumpe (3), die am Eingang (12) mit dem Puffertank (4) verbunden ist.

7. Vorrichtung nach Anspruch 6,
**dadurch gekennzeichnet, dass**
der Ausgang des Befüllventils (5) mit dem Ausgang eines weiteren Übertragungsventils (29) verbunden ist.

8. Vorrichtung nach einem der Ansprüche 6 oder 7,
**dadurch gekennzeichnet, dass**
die Ausgänge (7, 14) der beiden Pumpen (2, 3) mit einem Sammler (15) verbunden sind, der mit einem zusätzlichen Eingang (18) versehen ist, der an eine Treibgasnachfüllung anschließbar ist.

## Claims

1. Method for re-testing a package (1) filled with a pressurised mixture of an active fluid and a propellant for the active fluid, a method in which the mixture is transferred into a buffer reservoir (4) in which the pressurised mixture is stored, and the mixture is caused to separate into a liquid phase and a vapour phase in equilibrium, the package (1) is re-tested, then filled again successively in the one and the other of the two phases, liquid (27) and vapour (28), of the buffer reservoir (4), in relative proportions which are metered.

2. Method according to claim 1, wherein the package (1) is weighed (25), and its interior pressure (26) is controlled to meter the relative proportions of the two phases, liquid (27) and vapour (28), as the package is filled again.

3. Method according to one of claims 1 and 2 wherein, to fill the package (1) again, the two phases, liquid (27) and vapour (28), of the buffer reservoir (4) are pumped separately.

4. Method according to one of claims 1 to 3, wherein, parallel to the refilling of the package (1) in the vapour phase (28) of the buffer reservoir (4), propellant is added to the package (1) in order to obtain a specific pressure in the package (1).

5. Method according to one of claims 1 to 4, wherein, a plurality of packages are re-tested by transferring their mixture into the buffer reservoir, then filling again the plurality of packages.

6. Apparatus for re-testing a package (1) filled with a pressurised mixture of an active fluid and a propellant for the active fluid, to implement the method of claim 1, said apparatus comprising:
- a suction pump (2) for liquid and gas comprising an inlet (6) and an outlet (7), both connected to the buffer reservoir (4), with two interposed valves, respectively for filling (5) and for transfer (10), and
- a gas suction pump connected at the inlet (12) to the buffer reservoir (4).

7. Apparatus according to claim 6, wherein the outlet of the filling valve (5) is connected to the outlet of another transfer valve (29).

8. Apparatus according to one of claims 6 and 7, wherein the outlets (7, 14) of the two pumps (2, 3) are connected to a collector (15) provided with an additional inlet (18) which can be connected to a propellant refill.
